# EUROPÄISCHE PATENTSCHRIFT

(11) **EP 2 786 055 B1**
(45) Veröffentlichungstag und Bekanntmachung des Hinweises auf die Patenterteilung: **11.01.2023**
(21) Anmeldenummer: 12786952.7
(22) Anmeldetag: 08.11.2012
(51) Int. Cl.: F16L 11/08, F16L 11/12, C08L 23/16, B32B 1/08, B32B 25/10, B32B 25/04

(54) **EXTRAKTIONSARMER SCHLAUCH, INSBESONDERE FÜR BRENNSTOFFZELLEN-ANWENDUNGEN, UND VERFAHREN ZU DESSEN HERSTELLUNG**
LOW-EXTRACTION HOSE, IN PARTICULAR FOR FUEL CELL APPLICATIONS, AND METHOD FOR PRODUCING IT
TUYAU FLEXIBLE À FAIBLE EXTRACTION, EN PARTICULIER POUR DES APPLICATIONS DE PILES À COMBUSTIBLE, ET SON PROCÉDÉ DE FABRICATION

(30) Priorität: 28.11.2011 DE 102011055752
(43) Veröffentlichungstag der Anmeldung: 08.10.2014
(73) Patentinhaber: ContiTech MGW GmbH, 34346 Hann. Münden (DE)
(72) Erfinder: SONT, Michael, 21640 Horneburg (DE)
(74) Vertreter: Continental Corporation
(86) Internationale Anmeldenummer: PCT/EP2012/072099
(87) Internationale Veröffentlichungsnummer: WO 2013/079293

(56) Entgegenhaltungen:
- EP-A1- 1 495 857
- EP-A1- 1 510 544
- EP-A2- 1 287 981
- US-A- 5 957 164

## Beschreibung

Die Erfindung betrifft einen Schlauch, der wenigstens folgenden Schichtenaufbau aufweist:
- eine Innenschicht aus einer vernetzten Kautschukmischung, die im Kontakt zu einem zu transportierenden Medium steht; und
- eine Außenschicht aus einer ebenfalls vernetzten Kautschukmischung, die gegen äußere Einflüsse schützt.

Im Folgenden wird zunächst allgemein der Stand der Technik der Kühlwasserschläuche beschrieben, wobei dann auf die Brennstoffzellen-Anwendungen besonders eingegangen wird.

In Kraftfahrzeugen mit Verbrennungsmotoren übernimmt der Kühlwasserkreislauf folgende Aufgaben:
- Es erfolgt eine Abführung der überschüssigen durch die Verbrennung entstehenden Wärme vom Motor zum Wasserkühler, gesteuert über ein einfaches Thermostatventil oder eine Kennfeldsteuerung, und zwar in Verbindung mit einer motordrehzahlabhängigen oder kennfeldgesteuerten elektrischen Kühlmittelpumpe.
- Es erfolgt eine Zuführung der überschüssigen durch die Verbrennung entstehenden Wärme vom Motor zu einem oder mehreren Heizungswärmetauschern, gesteuert entweder dauernd oder über ein Heizungsventil.
- Es erfolgt eine Kühlung der Ladeluft in Ladeluft-Wärmetauschern, die mit Kühlwasser als Kühlmittel betrieben werden.
- Es erfolgt eine Kühlung von Zusatzaggregaten, beispielsweise von Stromgeneratoren, Automatik-Getrieben, Turboladern, Abgasrückführung und von anderen Aggregaten.
- Es erfolgt schließlich ein Ausgleich der Schwankungen des Kühlmittelvolumens über einen Ausgleichsbehälter.

Als Medium für den Kühlwasserkreislauf in Kraftfahrzeugen mit Verbrennungsmotoren wird üblicherweise ein Wassergemisch mit mindestens 33 Vol%-Anteil Ethylenglykol (garantiert einen Einfrierschutz bis etwa -20°C) und maximal 68 Vol%-Anteil Ethylenglykol (garantiert einen Einfrierschutz bis etwa -69°C) eingesetzt. Üblich sind in Mitteleuropa etwa 50 Vol%-Anteil an Ethylenglykol mit Einfrierschutz bis etwa -40°C. Der Gehalt an Ethylenglykol im Kühlwasser sollte 60 Vol% nicht übersteigen, da sonst durch die geringere spezifische Wärmekapazität des Ethylenglykols die Kühlleistung zu stark absinkt. Das richtige Mischungsverhältnis von Wasser zu Ethylenglykol wird eingestellt durch Verdünnung des Kühlmittels auf Basis von unverdünntem Ethylenglykol mit Wasser, dessen Härte und Salzgehalt einen bestimmten Maximalwert nicht übersteigen sollte.

Wegen des im Kühlwasser immer vorhandenen Sauerstoffs müssen zudem alle metallischen Komponenten im Kühlwasserkreislauf gegen Korrosion geschützt werden. Diesen Schutz gegen Korrosion der metallischen Teile im Kühlwasserkreislauf erreicht man durch Zusatz von Korrosionsschutzmitteln zum Kühlmittel. Üblich sind dabei folgende drei Varianten von Korrosionsschutzmitteln:
- Silikathaltige Hybrid-Korrosionsschutzmittel;
- Silikatfreie OAT-Korrosionsschutzmittel und
- Silikathaltige Si-OAT-Korrosionsschutzmitteln, die die Vorteile von Hybrid- und OAT-Korrosionsschutzmittel kombinieren.

Für besondere Einsatzzwecke ohne Frostgefahr wird auch Wasser ohne Ethylenglykol-Zusatz, aber mit Korrosionsschutzmitteln verwendet.

Die Innenschicht von Kühlwasserschläuchen muss daher beständig sein gegen Kühlmittelgemische mit einem Korrosionsschutzmittel in den oben angegebenen Zusammensetzungen im Temperaturbereich von -40°C bis zu Dauertemperaturen von 125°C und Spitzentemperaturen von 160°C.

Diese geforderte Beständigkeit gegen Kühlmittelgemische besitzen nur peroxidisch vernetzte Kautschukmischungen auf der Basis von EPM oder EPDM. Auf diese Kautschukmischungen und Alternativen wird noch näher eingegangen.

Die Betriebsdrücke im Kühlkreislauf entstehen durch hohe Temperaturen des Kühlmittels (Siedepunkt etwa 110°C) und durch den Förderdruck der Kühlwasserpumpe. Für die Aufnahme von Relativbewegungen zwischen den Stutzen, die motorfest oder an motorfesten Aggregaten angebracht sind, und Stutzen, die karosseriefest angebracht sind, beispielsweise Wasserkühler und Ausgleichsbehälter, müssen die Kühlwasserschläuche neben der Kühlmittelbeständigkeit und der Druckbeständigkeit auch eine hohe Flexibilität und dynamische Tüchtigkeit aufweisen.

Zur Aufnahme der Druckbelastung werden Kühlwasserschläuche mit einem Festigkeitsträger zwischen der Innenschicht und der Außenschicht hergestellt. Der Festigkeitsträger kann in einer oder mehreren Lagen ausgeführt sein. Eingesetzt werden dabei zumeist synthetische Garne, beispielsweise aus Polyestern oder Polyamiden.

Besonders zu erwähnen sind hier Aramid-Garne aus aromatischem Polyamid, beispielsweise para-Aramid, meta-Aramid und deren Modifikationen. Auch alle anderen Garne mit einer ausreichenden Temperatur- und Hydrolysebeständigkeit sind einsetzbar.

Die Herstellung dieser Kühlwasserschläuche kann geschehen über Extrusionsverfahren mit Einbringen des Festigkeitsträgers, beispielsweise über Stricken, Wendeln, Flechten oder über Wickelverfahren von mit Kautschukmischungen belegten Geweben oder auch durch Kombinationen aus Extrusions- und Wickelverfahren.

Im Folgenden wird nun näher auf den Stand der Technik der Kautschukmischungen derartiger Schläuche eingegangen, wobei beispielsweise als Literatur die DIN 73411 (Werkstoffklasse B) zu nennen ist.

Kühlwasserschläuche werden aus peroxidisch vernetzten Kautschukmischungen auf der Basis von EPM oder EPDM hergestellt, und zwar sowohl für die Innenschicht als auch die Außenschicht. Sie zeichnen sich durch ein gutes Setzungsverhalten bei gleichzeitig hoher dynamischer Tauglichkeit aus. Die Temperaturbeständigkeit einer EPDM-Mischung für die Außenschicht der Kühlwasserschläuche reicht bis maximal 140°C Dauertemperaturbelastbarkeit mit einer Alterungsdauer von 1000 Stunden und maximal 160°C Spitzentemperaturbelastbarkeit mit einer Alterungsdauer von 168 Stunden bei der Heißluftalterung, wobei die Reißdehnung nach der Alterung um maximal 50% gegenüber dem Anlieferungswert abnehmen darf. Die Temperaturbeständigkeit einer EPM-Mischung für die Außenschicht der Kühlwasserschläuche reicht bis maximal 150°C Dauertemperaturbelastbarkeit mit einer Alterungsdauer von 1000 Stunden und maximal 170°C Spitzentemperaturbelastbarkeit mit einer Alterungsdauer von 168 Stunden bei der Heißluftalterung, wobei die Reißdehnung nach der Alterung auch hier nur um maximal 50% gegenüber dem Anlieferungswert abnehmen darf.

Kühlwasserschläuche aus EPM- oder EPDM-Mischungen für die Innenschicht und Außenschicht nach dem oben erwähnten Stand der Technik weisen jedoch folgende Nachteile auf:
- Selbst bei Einsatz einer EPM-Mischung ist die Temperaturbeständigkeit der Außenschicht begrenzt auf eine Dauertemperatur 150°C mit einer Spitzentemperatur 170°C.
- Die EPDM- oder EPM-Außenschicht ist unbeständig gegen Motoröle, Getriebeöle und Dieselkraftstoffe.

Im Folgenden werden noch andere Werkstoffkonzepte von Kühlwasserschläuchen und ihre Nachteile vorgestellt.
- Kühlwasserschläuche aus einer Silikonkautschuk-Mischung für die Innenschicht und Außenschicht entsprechend der DIN 73411 (Werkstoffklasse C) weisen zwar eine verbesserte Hitzebeständigkeit und Ölbeständigkeit der Außenschicht auf, die Kühlmittelbeständigkeit der Innenschicht ist aber schwächer als bei den peroxidisch vernetzten EPM- oder EPDM-Mischungen.
- Kühlwasserschläuche aus einer Silikonkautschuk-Mischung für die Innenschicht und Außenschicht sind wegen der geringen Standfestigkeit der Silikonkautschuk-Mischungen schwieriger herzustellen als entsprechende EPM- oder EPDM-Schläuche.
- Kühlwasserschläuche aus einer Silikonkautschuk-Mischung für die Innenschicht und Außenschicht sind vom Materialpreis deutlich teurer als EPM-, EPDM- oder AEM-Mischungen.
- Kühlwasserschläuche aus einer peroxidisch vernetzten AEM-Mischung für die Innenschicht und Außenschicht weisen zwar eine verbesserte Hitzebeständigkeit und Ölbeständigkeit der Außenschicht auf, die Kühlmittelbeständigkeit der Innenschicht ist aber für Kühlwasserschläuche nicht ausreichend.
- Kühlwasserschläuche aus einer peroxidisch vernetzten EPM- oder EPDM-Mischung für die Innenschicht und einer peroxidisch vernetzten CM-Mischung für die Außenschicht weisen zwar eine verbesserte Ölbeständigkeit der Außenschicht auf, die Hitzebeständigkeit der CM-Außenschicht ist aber schlechter als bei einer peroxidisch vernetzten EPM- oder EPDM-Außenschicht.
- Kühlwasserschläuche nach der Patentschrift DE 42 15 778 C2 und der Offenlegungsschrift EP 0 205 724 A2 mit einer Innenschicht aus einer peroxidisch vernetzten EPM- oder EPDM-Mischung und einer Außenschicht aus einer peroxidisch vernetzten AEM- oder ACM-Mischung sind wegen der peroxidischen Vernetzung der AEM- bzw. ACM-Mischung entweder dynamisch nur begrenzt belastbar oder zeigen ein schlechtes Setzungsverhalten der Außenschicht.
- Rohre aus Thermoplasten aus Polyamid (PA), beispielsweise PA6, PA6.6, PA11, PA12, oder aus anderen Thermoplasten, beispielsweise Polypropylen, besitzen zu hohe Steifigkeiten.
- Schläuche aus thermoplastischen Elastomeren (TPE) oder thermoplastischen Olefinen (TPO) ohne eingebettete Festigkeitsträgerschicht weisen eine zu geringe Druckbeständigkeit auf.
- Schläuche aus TPE oder TPO mit einer eingebetteten Festigkeitsträgerschicht weisen ein zu schlechtes Setzungsverhalten auf.

Schläuche aus dem Stand der Technikentsprechenden EP(D)M-Mischungen mit einer zusätzlichen inneren Sperrschicht (Inliner), beispielsweise aus Elastomer, Thermoplast, oder TPE, können wegen der möglichen Migration der Bestandteile der EP(D)M-Mischung in die Sperrschicht die Nachteile der dem Stand der Technik entsprechenden EP(D)M-Schläuche nicht vollständig beseitigen. Ein derartiger Schlauch mit einer zusätzlichen inneren Sperrschicht (Inliner) aus einem Laminat enthaltend eine Metallfolie und ein Harz wird bspw in EP 1 287 981 A2 beschrieben. Dort werden zudem Prozessöle, d.h. Weichmacher, in großen Mengen von 60 phr hinzugefügt.

Im Folgenden wird nun auf die besondere Problematik von Kühlwasserschläuchen für Brennstoffzellen-Anwendungen, beispielsweise für Anwendungen in Brennstoffzellen-Fahrzeugen, näher eingegangen, wobei insbesondere auf folgende Patentliteratur verwiesen wird:
EP 1 459 872 A2
US 7 150 294 B2
US 7 150 295 B2
US 7 312 270 B2

Zusammenfassend bleibt dabei Folgendes festzuhalten:
- Die zur Verbesserung der Verarbeitungseigenschaften der EP(D)M-Mischung zugesetzten Weichmacher und/oder Verarbeitungshilfsmittel können durch die zu transportierenden Medien wie Luft, Wasser, Wassergemisch oder Wasser/Kühlmittelgemisch extrahiert werden und die Funktion des Brennstoffzellen-Aggregates beeinträchtigen oder zerstören.
- Die zur Verbesserung der Wärmebeständigkeit der EP(D)M-Mischung zugesetzten Alterungsschutzmittel und/oder Metalloxide können durch die zu transportierenden Medien der oben genannten Art extrahiert werden und die Funktion des Brennstoffzellen-Aggregates beeinträchtigen oder zerstören.
- Die zur Verbesserung der UV-Beständigkeit der EP(D)M-Mischung zugesetzten UV-Schutzmittel können durch die zu transportierenden Medien der oben genannten Art extrahiert werden und die Funktion des Brennstoffzellen-Aggregates beeinträchtigen oder zerstören.
- Die zur Vernetzung der EP(D)M-Mischung zugesetzten Reste der Coagenzien und Zersetzungsprodukte des Peroxids oder der Peroxide können durch die zu transportierenden Medien der oben genannten Art extrahiert werden und die Funktion des Brennstoffzellen-Aggregates beeinträchtigen oder zerstören.
- Das nach dem Prozess der Mischungsherstellung benutzte Felltrennmittel der Batch-Off-Anlage wird bei einem Extrusions-Prozess in die Mischung eingearbeitet und kann durch die zu transportierenden Medien der oben genannten Art extrahiert werden und die Funktion des Brennstoffzellen-Aggregates beeinträchtigen oder zerstören.
- Die nach dem Prozess der Extrusion während des Schneidens der Rohlinge benutzte Trennmittel-Lösung wird während des Vulkanisations-Prozesses von der EP(D)M-Mischung teilweise aufgenommen und kann durch die zu transportierenden Medien der oben genannten Art extrahiert und die Funktion des Brennstoffzellen-Aggregates beeinträchtigen oder zerstören.
- Das für das Aufziehen des Rohlings auf den Metalldorn und das Abziehen der vulkanisierten Schläuche vom Metalldorn benutzte Dorngleitmittel kann durch extrahierte Mischungsbestandteile verunreinigt sein.

Im Hintergrund der hier geschilderten Gesamtproblematik und des in dem oben erwähnten Standes der Technik offenbarten Zielkonfliktes besteht die Aufgabe der Erfindung darin, einen gattungsgemäßen Schlauch bereitzustellen, der sich einerseits durch eine gegenüber dem zu transportierenden Medium beständigen Innenschicht und andererseits durch eine gegenüber der Einwirkung von Heißluft, UV-Strahlung und Ozon beständige Außenschicht auszeichnet sowie schließlich extraktionsarm ist, und zwar unter dem Aspekt vieler Anwendungsmöglichkeiten, insbesondere für Brennstoffzellen-Anwendungen.

Gelöst wird diese Aufgabe dadurch, dass die Innenschicht und Außenschicht jeweils aus einer peroxidisch vernetzten Kautschukmischung auf der Basis von verschnittfreiem EPM oder eines EPM-Verschnittes oder von verschnittfreiem EPDM oder eines EPDM-Verschnittes bestehen, wobei die jeweilige Kautschukmischung einen Füllstoff enthält, wobei ferner wenigstens die Kautschukmischung der Innenschicht Weichmacher in einer Menge von ≤ 3 phr enthält und wobei die Kautschukmischung der Innenschicht und Außenschicht Haftmittel in einer Menge von ≤ 3 phr enthält.

Im Rahmen einer einfachen Schlauchausführung kann der Schlauch frei von einer Festigkeitsträgerschicht sein, wobei die Innenschicht und Außenschicht einen einlagigen Gesamtverbund bilden. Ein derartiger Schlauch wird jedoch nur dann eingesetzt, wenn das zu führende Medium nicht unter Überdruck steht.

Zumeist wird jedoch der Schlauch mit einer zusätzlichen Festigkeitsträgerschicht versehen, die ein- oder mehrlagig ausgebildet sein kann. Auf diese Weise kann das zu transportierende Medium unter Druck stehen.

Die Festigkeitsträgerschicht ist aus einem Gewebe, Gewirke oder Gestrick gebildet, insbesondere auf der Basis eines textilen Werkstoffes. Die diesbezüglichen Werkstoffe können ein Polyamid (PA), Polyimid (PI), ein Aramid, insbesondere para-Aramid oder meta-Aramid, ein Polyvinylacetal (PVA), ein Polyvinylalkohol (PVAL), Baumwolle (CO), Modal (CMD), Rayon (CV), ein Polyetheretherketon (PEEK), ein Polyester, insbesondere Polyethylentherephthalat (PET) oder Polyethylen-2,6-naphthalat (PEN), ein Polysulfon (PSU), ein Polyoxadiazol (POD), ein Polybenzoxazol (PBO), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen. Im Rahmen einer neueren Schlauchentwicklung (DE 10 2008 037 417 A1) kommt beispielsweise ein Hybridkonzept aus PPS und PA zur Anwendung. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt.

Hinsichtlich der folgenden Mischungsingredienzien der Kautschukmischung für die Innenschicht und Außenschicht gelten folgende vorteilhaften Kriterien:
- Die Kautschukmischung der Außenschicht ist ebenfalls arm an oder insbesondere frei von einem Weichmacher.
- Die Kautschukmischung der Innenschicht und Außenschicht enthält ein Vernetzersystem, umfassend ein Coagenz und ein Peroxid. Auf diesbezügliche Details wird an einer anderen Stelle noch näher eingegangen.
- Wenigstens die Kautschukmischung der Innenschicht ist arm an oder insbesondere frei von einem Metalloxid. Zumeist betrifft dies jedoch ausschließlich die Innenschicht.
- Wenigstens die Kautschukmischung der Innenschicht ist arm an oder insbesondere frei von einem Alterungsschutzmittel, Verarbeitungshilfsmittel und einem UV-Schutzmittel. Zumeist betrifft dies zusätzlich auch die Außenschicht.
- Die Kautschukmischung der Innenschicht und Außenschicht ist arm an oder insbesondere frei von einem Trennmittel für die Ablage der Kautschukmischung und des Schlauchrohlings.
- Die Kautschukmischung der Innenschicht und Außenschicht ist arm an oder insbesondere frei von einem Haftmittel.
- Der oben verwendete Begriff "arm an" einem Weichmacher, Metalloxid, Alterungsschutzmittel, Verarbeitungshilfsmittel, UV-Schutzmittel, Trennmittel und einem Haftmittel bedeutet, dass jede einzelne Substanz lediglich in einer Menge von ≤ 3 phr, insbesondere ≤ 2 phr, insbesondere wiederum ≤ 1 phr, vorkommt, und zwar bezogen auf die jeweilige Kautschukmischung der Innenschicht bzw. Außenschicht.

Im Folgenden wird auf die Zusammensetzung der Kautschukmischung der Innenschicht und der Außenschicht näher eingegangen.

### - Innenschicht

Die Kautschukmischung basiert auf EPM oder EPDM oder deren Verschnitte, beispielsweise ein EPM/EPDM-Verschnitt mit 30 phr EPM und 70 phr EPDM. Auch Verschnitte mit anderen Kautschuktypen sind möglich. Zumeist wird jedoch die verschnittfreie Werkstoffversion bevorzugt. Die Mischungsingredienzien sind:

| | |
|---|---|
| Füllstoff | (a) |
| Coagenz | (b) |
| Peroxid | (c) |

| | |
|---|---|
| (a) FEP-, GPF-, HAF-, SRF-, Flamm-, MT-Ruße, Leitfähigkeits-Ruß und andere bekannte Ruße oder Kombinationen daraus, bevorzugt aber eine Kombination aus FEF- oder SRF-Ruß für die Verstärkung, MT-Ruß für die Extrusionsfähigkeit und Leitfähigkeitsruß für die Einstellung von elektrischem Oberflächenwiderstand und spezifischem elektrischen Durchgangswiderstand (b) Alle dem Fachmann bekannten Allylverbindungen, beispielsweise TAC, TAIC, TAP, TATM, DAPE, DATP, TAE, TC, ATC und andere bekannte Allylverbindungen; Methacrylate, beispielsweise BDMA, EDMA, TEDMA, TRIM und andere bekannte Methycrylate; ZDMA; BR, insbesondere 1,2-BR; N,N'-m-phenylen-dimaleimid; Kombinationen der vorgenannten Coagenzien (c) Alle dem Fachmann bekannten Peroxide, beispielsweise Alkyl-Aralkyl-Peroxide, Diaralkyl-Peroxide, Peroxyketale, Peroxyester und andere bekannte Peroxide sowie Kombinationen daraus, bevorzugt Dicumylperoxid, Bis(tert-butylperoxyisopropyl)-benzol und 2,5-Bis(tert-butylperoxy)-2,5-dimethylhexan | |

### - Außenschicht

Die Kautschukmischung basiert ebenfalls auf EPM oder EPDM oder deren Verschnitte, beispielsweise ein EPM/EPDM-Verschnitt mit 30 phr EPM und 70 phr EPDM. Auch Verschnitte mit anderen Kautschuktypen sind möglich. Bevorzugt werden dabei die verschnittfreien Kautschukmischungen. Die Mischungsingredienzien sind:

| | |
|---|---|
| Füllstoff | (d) |
| Metalloxid | (e) |
| Coagenz | (f) |
| Peroxid | (g) |

| | |
|---|---|
| (d) siehe Erläuterung (a) der Kautschukmischung der Innenschicht (e) CaO, MgO und andere dem Fachmann bekannte Metalloxide oder Kombinationen daraus (f) siehe Erläuterung (b) der Kautschukmischung der Innenschicht (g) siehe Erläuterung (c) der Kautschukmischung der Innenschicht | |

Der Mengenanteil an Coagenz (Aktivator) für die Innenschicht und Außenschicht beträgt jeweils 0,1 phr bis 10,0 phr, insbesondere 0,2 phr bis 5,0 phr, insbesondere wiederum 0,3 phr bis 2,0 phr.

Der Mengenanteil an peroxidischem Vernetzungsmittel für die Innenschicht und Außenschicht beträgt jeweils 0,5 phr bis 10,0 phr, insbesondere 0,8 phr bis 8,5 phr, insbesondere wiederum 1,0 phr bis 5,0 phr.

Die Zugabe weiterer denkbarer, dem Fachmann bekannten Mischungsingredienzien für die Innenschicht und Außenschicht, beispielsweise Kieselsäuren, Kreide, Kaolin, Aluminiumsilikate, Calciumsilikate, Magnesiumsilikate sowie deren Varianten mit Oberflächenmodifizierung, beispielsweise durch Silane, und andere dem Fachmann bekannte helle Füllstoffe, Kurzfasern, Füllstoffmehle, Recyclate usw. beeinträchtigt nicht die Wirkung des erfindungsgemäßen Schlauches.

Die Gesamtmenge der Mischungsingredienzien für die Innenschicht und Außenschicht, und zwar ohne das Vernetzersystem, beträgt jeweils 130 phr bis 400 phr, insbesondere 150 phr bis 250 phr.

Im Folgenden werden noch einige im Zusammenhang mit der Kautschukmischung des erfindungsgemäßen Schlauches verwendete Kurzbezeichnungen erläutert:

| | | | |
|---|---|---|---|
| EPM | Ethylen-Propylen-Kautschuk | | |
| EPDM | Ethylen-Propylen-Dien-Kautschuk | | |
| TAC | Triallylcyanurat | | |
| ZDMA | Zink-Dimethacrylat | | |
| SRF | super abrasion | ) | Kurzbezeichnungen für Ruß-Typen |
| HAF | high abrasion | ) | Römpps Chemie-Lexikon, Band 5, 1987 |
| FEF | fast extrusion | ) | ebenso |
| GPF | general purpose | ) | ebenso |
| phr | per hundred rubber | | |

Hinsichtlich der Mischungsingredienzien werden im Rahmen dieser Übersicht nur die besonders häufig verwendeten Substanzen näher erläutert. Ansonsten wird insbesondere auf Römpp Online verwiesen.

Das zu transportierende Medium ist Reinluft, Wasser, dem insbesondere ein Korrosionsschutzmittel beigemischt ist, ein Glykol/Wasser-Gemisch, dem insbesondere wiederum ein Korrosionsschutzmittel beigemischt ist, ein Alkohol/Wasser-Gemisch, ein Alkohol oder ein polares Medium, gegen das die Innenschicht beständig ist, beispielsweise eine Bremsflüssigkeit und PAG-Öle. Von besonderer Bedeutung ist ein Ethylenglykol/Wasser-Gemisch, ein Propylenglykol/Wasser-Gemisch oder ein Ethylenglykol/Glycerin/Wasser-Gemisch.

Hinsichtlich des Transportes des Mediums findet der erfindungsgemäße Schlauch insbesondere folgende Anwendungen:
- Der Schlauch wird zum Transport des Mediums unter statischem oder zyklischem Überdruck und/oder bei Relativbewegung der Schlauchstutzen untereinander eingesetzt.
- Der Schlauch wird überall dort verwendet, an dessen Außenschicht eine Schutzwirkung gegen Abrieb und/oder Hitze gefordert werden.
- Der Schlauch kann zudem als Linearschlauch, Krümmerschlauch oder Abzweigschlauch mit jeweils glatter und/oder faltiger Oberfläche eingesetzt werden.
- Der Schlauch wird im Rahmen einer Schlauchanordnung eingesetzt, umfassend den Schlauch und wenigstens ein Zusatzbauteil. Der Schlauch kommt dabei insbesondere in Kombination mit einem Hennstecker, einer VDA-Kupplung, einem Rohrstutzen mit Befestigungselementen, einem Scheuerschutz oder einem Schellenhalter zum Einsatz.
- Der Schlauch kommt für Brennstoffzellen-Anwendungen zum Einsatz, wobei die oben genannten Anwendungskriterien anwendbar sind.

Eine weitere Aufgabe der Erfindung besteht darin, ein Verfahren bereitzustellen, mit dem auf einfache wie auch kostengünstige Weise ein gattungsgemäßer Schlauch hergestellt werden kann.

Im Hinblick auf die Innenschicht und Außenschicht kommen folgende drei Verfahrensvarianten zum Einsatz:

### - Variante A

Bei der Herstellung des Schlauchrohlings werden die Innenschicht und Außenschicht jeweils durch Extrusion gebildet. Ist der Schlauch frei von einer Festigkeitsträgerschicht, kann hier auch die Co-Extrusion zur Anwendung gelangen.

### - Variante B

Bei der Herstellung des Schlauchrohlings werden die Innenschicht und Außenschicht jeweils durch Kalandrieren gebildet.

### - Variante C

Der Schlauchrohling wird als Formteil durch Spritzguss der jeweiligen Kautschukmischung gebildet.

Nach den Teilverfahrensschritten gemäß der Varianten A, B und C erfolgt dann die Fertigstellung des Schlauches, und zwar unter folgenden Gesichtspunkten:
- In Verbindung mit Anspruch 2 wird der Schlauchrohling aus Innenschicht und Außenschicht ohne weitere Schichten vulkanisiert. Der Schlauch ist also frei von einem Festigkeitsträger.
- In Verbindung mit Anspruch 3 wird der Schlauchrohling aus Innenschicht und Außenschicht zusätzlich mit einer Festigkeitsträgerschicht konfektioniert, verbunden mit einer abschließenden Vulkanisation. Das Einbringen der ein- oder mehrlagigen Festigkeitsträgerschicht kann beispielsweise mittels Stricken, Wendeln oder Flechten erfolgen. Auch ein Wickelverfahren von mit Kautschukmischungen belegten Geweben ist möglich. Auch die Kombination von Extrusions- und Wickelverfahren kann zur Anwendung kommen. Diesbezüglich wird auf den allgemeinen Stand der Verfahrenstechnik bei der Herstellung von textilarmierten Schläuchen verwiesen.

Das Problem der Haftung zwischen der peroxidisch vernetzten (EP(D)M-Innenschicht und der peroxidisch vernetzten EP(D)M-Außenschicht mit dazwischen liegendem Festigkeitsträger darf dabei nicht durch Besprühen der mit dem Festigkeitsträger versehenen Innenschicht mit einer Haftlösung gelöst werden, sondern nur mit geeigneten Verfahren, beispielsweise mit einer Warm-in-Warm-Extrusion von Innenschicht und Außenschicht oder mittels einer Heißluft-Aufwärmung der mit dem Festigkeitsträger versehenen Innenschicht.

Bei der Vulkanisation wird vorzugsweise ein sauberes und frisches Dorngleitmittel verwendet.

Die Erfindung wird nun anhand eines Ausführungsbeispieles unter Bezugnahme auf eine schematische Zeichnung erläutert.

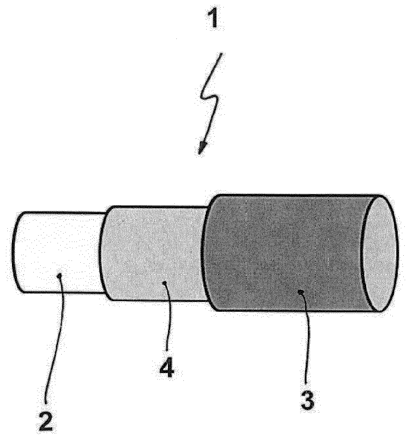

Die einzige Figur zeigt einen Schlauch 1 mit folgendem Schichtenaufbau bei folgender beispielhaften Werkstoffkonzeption:

| | |
|---|---|
| Innenschicht 2: | peroxidisch vernetzte und verschnittfreie |
| | EPDM-Kautschukmi schung |
| Außenschicht 3: | peroxidisch vernetzte und verschnittfreie |
| | EPDM-Kautschukmi schung |
| Festigkeitsträgerschicht 4: | Textilfäden aus Aramid |

Alle drei Schichten bilden im Zuge der Vulkanisation einen festen Haftverbund.

Werden an den Schlauch keine hohen Druckanforderungen gestellt, so kann die Festigkeitsträgerschicht 3 entfallen.

Im Folgenden werden die wesentlichen Vorteile des erfindungsgemäßen Schlauches zum Transport von Luft, Wasser, Wassergemisch und Wasser/Kühlmittelgemisch unter Einbezug experimenteller Ergebnisse zusammengefasst:
- Die EP(D)M-Mischung der Innenschicht und der Außenschicht erfüllt die Anforderungen der DIN 73411 B für Kühlwasserschläuche an die Innenschicht, auch wenn die Lagerung abweichend von der Norm in diversen Medien durchgeführt wird, nämlich:
   (1) in Kühlwasser aus 50% Glysantin G 48 und 50% Wasser
   (2) in Kühlwasser aus silikathaltigem Hybrid-Korrosionsschutzmittel/Wasser
   (3) in Kühlwasser aus silikatfreiem OAT-Korrosionsschutzmittel/Wasser
   (4) in Kühlwasser aus silikathaltigem Si-OAT-Korrosionsschutzmittel/Wasser
   (5) in Glysantin FC G 20
   (6) in Glysantin FC G 21
   (7) in deionisiertem Wasser bei Siedetemperatur
   (8) in deionisiertem Wasser plus Schwefelsäure-Zusatz mit pH-Wert 4 der Lösung

Glysantin ist eine Produktmarke der BASF, wobei hinsichtlich Details auf die diesbezügliche Firmeninformation verwiesen wird.
- Bei einem Extraktionstest der Innenschicht mit deionisiertem Wasser wird die Leitfähigkeit des Extraktes nur sehr wenig erhöht.
- Bei einem Extraktionstest der Innenschicht mit Methanol ist der Gehalt des Extraktes an organischen Niedrigsiedern und Hochsiedern sehr gering.
- Der spezifische elektrische Durchgangswiderstand der Innenschicht kann durch einen niedrigen Anteil an Leitfähigkeitsruß auf den notwendigen hohe spezifischen elektrischen Durchgangswiderstand eingestellt werden, und zwar zur Vermeidung elektrochemischer Reaktionen zwischen der EP(D)M-Mischung der Innenschicht und einem Metallstutzen.

- Der elektrische Oberflächenwiderstand der Außenschicht kann durch einen hohen Anteil an Leitfähigkeitsruß auf den notwendigen niedrigen elektrischen Oberflächenwiderstand eingestellt werden, und zwar zur Vermeidung elektrostatischer Aufladungen.
- Die EP(D)M-Mischung der Außenschicht erfüllt die Anforderungen der DIN 73411 B an die Außenschicht mit Ausnahme der Öllagerung, die bei Brennstoffzellen-Fahrzeugen keine Bedeutung besitzt.
- Der erfindungsgemäße Schlauch erfüllt die Funktionsanforderungen der DIN 73411 B.
- Der erfindungsgemäße Schlauch kann als Wasserschlauch in allen Anwendungen benutzt werden, bei denen eine möglichst geringe Verunreinigung des Wassers durch Extraktion aus der EP(D)M-Mischung erwünscht oder notwendig ist.
- Der erfindungsgemäße Schlauch kann im Einsatz bis maximal 135°C Dauer-Umgebungstemperatur die teueren Silikonkautschuk-Schläuche ersetzen und damit die Kosten der Schlauchsysteme für Brennstoffzellen-Aggregate senken.
- Der erfindungsgemäße Schlauch ist gegen heißes Wasser und Wasser/Kühlgemische bei Temperaturen oberhalb 100°C besser beständig als Silikonkautschuk-Schläuche.

### Bezugszeichenliste

### (Teil der Beschreibung)

- 1: Schlauch
- 2: Innenschicht
- 3: Außenschicht
- 4: Festigkeitsträgerschicht

## Patentansprüche

1. Schlauch (1), der wenigstens folgenden Schichtenaufbau aufweist:
- eine Innenschicht (2) aus einer vernetzten Kautschukmischung, die im Kontakt zu einem zu transportierenden Medium steht; und
- eine Außenschicht (3) aus einer ebenfalls vernetzten Kautschukmischung, die gegen äußere Einflüsse schützt;
**dadurch gekennzeichnet, dass** die Innenschicht (2) und Außenschicht (3) jeweils aus einer peroxidisch vernetzten Kautschukmischung auf der Basis von verschnittfreiem EPM oder eines EPM-Verschnittes oder von verschnittfreiem EPDM oder eines EPDM-Verschnittes bestehen, wobei die jeweilige Kautschukmischung einen Füllstoff enthält, wobei ferner wenigstens die Kautschukmischung der Innenschicht (2) Weichmacher in einer Menge von ≤ 3 phr enthält und wobei die Kautschukmischung der Innenschicht (2) und Außenschicht (3) Haftmittel in einer Menge von ≤ 3 phr enthält, wobei sich die Menge an Haftmittel jeweils auf die jeweilige Kautschukmischung der Innenschicht bzw. Außenschicht bezieht.

2. Schlauch nach Anspruch 1, **dadurch gekennzeichnet, dass** die Kautschukmischung der Innenschicht (2) und Außenschicht (3) ein Vernetzersystem enthält, umfassend ein Coagenz und ein Peroxid.

3. Schlauch nach einem der Ansprüche 1 bis 2, **dadurch gekennzeichnet, dass** der Füllstoff ein Ruß ist.

4. Schlauch nach einem der Ansprüche 1 bis 3, **dadurch gekennzeichnet, dass** wenigstens die Kautschukmischung der Innenschicht (2) arm an oder insbesondere frei von einem Metalloxid ist, d.h. dass die Menge an Metalloxid ≤ 3 phr beträgt.

5. Schlauch nach einem der Ansprüche 1 bis 4, **dadurch gekennzeichnet, dass** wenigstens die Kautschukmischung der Innenschicht (2) arm an oder insbesondere frei von einem Alterungsschutzmittel ist, d.h. dass die Menge an Alterungsschutzmittel ≤ 3 phr beträgt.

6. Schlauch nach einem der Ansprüche 1 bis 5, **dadurch gekennzeichnet, dass** wenigstens die Kautschukmischung der Innenschicht (2) arm an oder insbesondere frei von einem Verarbeitungshilfsmittel ist, d.h. dass die Menge an Verarbeitungshilfsmittel ≤ 3 phr beträgt.

7. Schlauch nach einem der Ansprüche 1 bis 6, **dadurch gekennzeichnet, dass** die Kautschukmischung der Innenschicht (2) und Außenschicht (3) arm an oder insbesondere frei von einem UV-Schutzmittel ist, d.h. dass die Menge an UV-Schutzmittel ≤ 3 phr beträgt.

8. Schlauch nach einem der Ansprüche 1 bis 7, **dadurch gekennzeichnet, dass** die Kautschukmischung der Innenschicht (2) und Außenschicht (3) arm an oder insbesondere frei von einem Trennmittel für die Ablage der Kautschukmischung und des Schlauchrohlings ist, d.h. dass die Menge an Trennmittel ≤ 3 phr beträgt, wobei sich die Menge an Trennmittel jeweils auf die jeweilige Kautschukmischung der Innenschicht bzw. Außenschicht bezieht.

9. Schlauch nach einem der Ansprüche 1 bis 8, **dadurch gekennzeichnet, dass** das zu transportierende Medium Reinluft, Wasser, Wasser mit einem Korrosionsschutzmittel, ein Alkohol/Wasser-Gemisch, ein Alkohol/Wasser-Gemisch mit einem Korrosionsschutzmittel oder ein nicht wässriges polares Medium ist.

10. Schlauch nach einem der Ansprüche 1 bis 9 zur Verwendung des Transportes des Mediums unter statischem oder zyklischem Überdruck und/oder bei Relativbewegung der Schlauchstutzen untereinander.

11. Schlauch nach einem der Ansprüche 1 bis 10 zur Verwendung als Linearschlauch, Krümmerschlauch oder Abzweigschlauch mit jeweils glatter und/oder faltiger Oberfläche.

12. Verfahren zur Herstellung eines Schlauches (1) nach einem der Ansprüche 1 bis 11, **dadurch gekennzeichnet, dass** bei der Herstellung des Schlauchrohlings die Innenschicht (2) und Außenschicht (3) jeweils durch Extrusion gebildet werden, verbunden mit der anschließenden Fertigstellung des Schlauches (1) durch Vulkanisation.

13. Verfahren zur Herstellung eines Schlauches (1) nach einem der Ansprüche 1 bis 11, **dadurch gekennzeichnet, dass** bei der Herstellung des Schlauchrohlings die Innenschicht (2) und Außenschicht (3) jeweils durch Kalandrieren gebildet werden, verbunden mit der anschließenden Fertigstellung des Schlauches (1) durch Vulkanisation.

14. Verfahren zur Herstellung eines Schlauches (1) nach einem der Ansprüche 1 bis 11, **dadurch gekennzeichnet, dass** der Schlauchrohling als Formteil durch Spritzguss der jeweiligen Kautschukmischung gebildet wird, verbunden mit der anschließenden Fertigstellung des Schlauches (1) durch Vulkanisation.

## Claims

1. Hose (1) comprising at least the following layer construction:
- an inner layer (2) composed of a crosslinked rubber mixture which is in contact with a medium to be transported; and
- an outer layer (3) composed of a likewise crosslinked rubber mixture which protect against external influences;
**characterized in that** the inner layer (2) and outer layer (3) are each composed of a peroxidically crosslinked rubber mixture based on unblended EPM or an EPM blend or on unblended EPDM or an EPDM blend, wherein the respective rubber mixture contains a filler, wherein in addition at least the rubber mixture of the inner layer (2) contains plasticizers in an amount of ≤ 3 phr and wherein the rubber mixture of the inner layer (2) and outer layer (3) contains adhesion promoter in an amount of ≤ 3 phr, wherein the amount of adhesion promoter is in each case based on the respective rubber mixture of the inner layer/outer layer.

2. Hose according to Claim 1, **characterized in that** the rubber mixture of the inner layer (2) and outer layer (3) contains a crosslinker system comprising a coagent and a peroxide.

3. Hose according to either of Claims 1 to 2, **characterized in that** the filler is a carbon black.

4. Hose according to any of Claims 1 to 3, **characterized in that** at least the rubber mixture of the inner layer (2) is low in or in particular free from a metal oxide, i.e. that the amount of metal oxide is ≤ 3 phr.

5. Hose according to any of Claims 1 to 4, **characterized in that** at least the rubber mixture of the inner layer (2) is low in or in particular free from an aging stabilizer, i.e. that the amount of aging stabilizer is ≤ 3 phr.

6. Hose according to any of Claims 1 to 5, **characterized in that** at least the rubber mixture of the inner layer (2) is low in or in particular free from a processing aid, i.e. that the amount of processing aid is ≤ 3 phr.

7. Hose according to any of Claims 1 to 6, **characterized in that** the rubber mixture of the inner layer (2) and outer layer (3) is low in or in particular free from a UV protectant, i.e. that the amount of UV protectant is ≤ 3 phr.

8. Hose according to any of Claims 1 to 7, **characterized in that** the rubber mixture of the inner layer (2) and outer layer (3) is low in or in particular free from a release agent for release of the rubber mixture and the unvulcanized hose, i.e. that the amount release agent is ≤ 3 phr, wherein the amount of release agent is in each case based on the respective rubber mixture of the inner layer/outer layer.

9. Hose according to any of Claims 1 to 8, **characterized in that** the medium to be transported is clean air, water, water with an anticorrosion agent, an alcohol/water mixture, an alcohol/water mixture with an anticorrosion agent or a nonaqueous polar medium.

10. Hose according to any of Claims 1 to 9 for use in transporting the medium under static or cyclic positive pressure and/or in case of relative movement of the hose fittings relative to one another.

11. Hose according to any of Claims 1 to 10 for use as a linear hose, elbow hose, or branched hose having in each case a smooth and/or corrugated surface.

12. Process for producing a hose (1) according to any of Claims 1 to 11, **characterized in that** in the production of the unvulcanized hose the inner layer (2) and outer layer (3) are each formed by extrusion accompanied by subsequent completion of the hose (1) by vulcanization.

13. Process for producing a hose (1) according to any of Claims 1 to 11, **characterized in that** in the production of the unvulcanized hose the inner layer (2) and outer layer (3) are each formed by calendaring accompanied by subsequent completion of the hose (1) by vulcanization.

14. Process for producing a hose (1) according to any of Claims 1 to 11, **characterized in that** the unvulcanized hose is formed as a molding by injection molding of the respective rubber mixture accompanied by subsequent completion of the hose (1) by vulcanization.

## Revendications

1. Tuyau (1) qui présente au moins la structure stratifiée suivante :
- une couche interne (2) composée d'un mélange de caoutchouc réticulé qui est en contact avec un milieu à transporter ; et
- une couche externe (3) composée d'un mélange de caoutchouc également réticulé qui protège contre des influences extérieures ;
**caractérisé en ce que** la couche interne (2) et la couche externe (3) sont constituées à chaque fois d'un mélange de caoutchouc réticulé de manière peroxydique à base d'EPM sans matière de chute ou d'une matière de chute d'EPM ou d'EPDM sans matière de chute d'une matière de chute d'EPDM, le mélange de caoutchouc respectif contenant une charge, en outre au moins le mélange de caoutchouc de la couche interne (2) contient des assouplissants en une quantité de ≤ 3 phr et le mélange de caoutchouc de la couche interne (2) et de la couche externe (3) contient des additifs en une quantité de ≤ 3 phr, la quantité d'adhésif se rapportant à chaque fois au mélange de caoutchouc respectif de la couche interne ou de la couche externe.

2. Tuyau selon la revendication 1, **caractérisé en ce que** le mélange de caoutchouc de la couche interne (2) et de la couche externe (3) contient un système d'agent de réticulation, comprenant un coagent et un peroxyde.

3. Tuyau selon l'une quelconque des revendications 1 à 2, **caractérisé en ce que** la charge est une suie.

4. Tuyau selon l'une quelconque des revendications 1 à 3, **caractérisé en ce qu'**au moins le mélange de caoutchouc de la couche interne (2) est pauvre en un oxyde métallique ou en particulier est exempt d'un oxyde métallique, c'est-à-dire que la quantité d'oxyde métallique est ≤ 3 phr.

5. Tuyau selon l'une quelconque des revendications 1 à 4, **caractérisé en ce qu'**au moins le mélange de caoutchouc de la couche interne (2) est pauvre en un agent de protection contre le vieillissement ou en particulier est exempt d'un agent de protection contre le vieillissement, c'est-à-dire que la quantité d'agent de protection contre le glissement est ≤ 3 phr.

6. Tuyau selon l'une quelconque des revendications 1 à 5, **caractérisé en ce qu'**au moins le mélange de caoutchouc de la couche interne (2) est pauvre en un auxiliaire de traitement ou en particulier est exempt d'un auxiliaire de traitement, c'est-à-dire que la quantité d'auxiliaire de traitement est ≤ 3 phr.

7. Tuyau selon l'une quelconque des revendications 1 à 6, **caractérisé en ce que** le mélange de caoutchouc de la couche interne (2) et de la couche externe (3) est pauvre en un agent de protection contre les UV ou en particulier est exempt d'un agent de protection contre les UV c'est-à-dire que la quantité d'agent de protection contre les UV est ≤ 3 phr.

8. Tuyau selon l'une quelconque des revendications 1 à 7, **caractérisé en ce que** le mélange de caoutchouc de la couche interne (2) et de la couche externe (3) est pauvre en agent de séparation pour le dépôt du mélange de caoutchouc et de la préforme du tuyau ou en particulier est exempt d'un agent de séparation pour le dépôt du mélange de caoutchouc et de la préforme du tuyau, c'est-à-dire que la quantité d'agent de séparation est ≤ 3 phr, la quantité d'agent de séparation se rapportant à chaque fois au mélange de caoutchouc respectif de la couche interne ou de la couche externe.

9. Tuyau selon l'une quelconque des revendications 1 à 8, **caractérisé en ce que** le milieu à transporter est de l'air pur, de l'eau, de l'eau comportant un agent de protection contre la corrosion, un mélange alcool/eau, un mélange alcool/eau comportant un agent de protection contre la corrosion ou un milieu polaire non aqueux.

10. Tuyau selon l'une quelconque des revendications 1 à 9 pour une utilisation du transport du milieu sous surpression statique ou cyclique et/ou lors d'un mouvement relatif des brides de tuyau les unes avec les autres.

11. Tuyau selon l'une quelconque des revendications 1 à 10 pour une utilisation en tant que tuyau linéaire, tuyau coudé ou tuyau de dérivation comportant chaque fois les surfaces plus lisses et/ou plus ridées.

12. Procédé pour la fabrication d'un tuyau (1) selon l'une quelconque des revendications 1 à 11, **caractérisé en ce que** lors de la préparation de la préforme de tuyau, la couche interne (2) et la couche externe (3) sont formées à chaque fois par extrusion, reliée à l'achèvement ultérieur du tuyau (1) parmi vulcanisation.

13. Procédé pour la fabrication d'un tuyau (1) selon l'une quelconque des revendications 1 à 11, **caractérisé en ce que** lors de la préparation de la préforme de tuyau, la couche interne (2) et la couche externe (3) sont formées à chaque fois par calandrage, relié à l'achèvement ultérieur du tuyau (1) par vulcanisation.

14. Procédé pour la fabrication d'un tuyau (1) selon l'une quelconque des revendications 1 à 11, **caractérisé en ce que** la préforme de tuyau est formée par moulage par pulvérisation du mélange de caoutchouc respectif, relié à l'achèvement ultérieur du tuyau (1) par vulcanisation.
